# FASCICULE DE BREVET EUROPEEN

(11) **EP 4 330 131 B1**
(45) Date de publication et mention de la délivrance du brevet: **21.08.2024**
(21) Numéro de dépôt: 22724729.3
(22) Date de dépôt: 22.04.2022
(51) Int. Cl.: B63B 1/30, B63B 32/64, B63B 1/26, B63B 32/66

(54) **HYDROFOIL À PORTANCE ET TRAÎNÉE VARIABLES POUR UN ENGIN NAUTIQUE**
TRAGFLÜGEL MIT VARIABLEM AUFTRIEB UND VARIABLEM WIDERSTAND FÜR EIN WASSERFAHRZEUG
HYDROFOIL WITH VARIABLE LIFT AND DRAG FOR A WATERCRAFT

(30) Priorité: 28.04.2021 FR 2104390
(43) Date de publication de la demande: 06.03.2024
(73) Titulaire: BILLOIS, Sébastien, 29680 Roscoff (FR)
(72) Inventeur: BILLOIS, Sébastien, 29680 Roscoff (FR)
(74) Mandataire: Berton, Anthony Christian Jacques
(86) Numéro de dépôt international: PCT/EP2022/060705
(87) Numéro de publication internationale: WO 2022/229020

(56) Documents cités:
- EP-A1- 1 304 288
- CN-A- 110 065 609
- FR-A1- 3 049 262
- IT-A1- UA20 163 845
- US-A1- 2020 331 562
- US-B1- 6 886 481

## Description

L'invention se rapporte à un hydrofoil pour un engin nautique et à un engin nautique comprenant un tel hydrofoil.

Les engins nautiques tels les bateaux, les planches à voile, les planches de stand up paddle, les planches de surf, les planches de kite surf ou les planches de windsurf utilisent des hydrofoils (ou foils) pour réduire la traînée d'une coque d'engin nautique traversant l'eau et fournir un déplacement plus véloce.

Les hydrofoils tels que celui du document FR3049262 permettent de faire varier la hauteur de la coque de l'engin nautique en fonction de la vitesse de l'engin dans l'eau.

Les hydrofoils comprennent un fuselage, un mât destiné à être fixé à l'engin nautique, deux ailes à l'avant du fuselage et un empennage à l'arrière du fuselage. Les ailes sont destinées à assurer une portance hydrodynamique à l'hydrofoil lorsqu'il est en déplacement dans l'eau.

Cependant, les hydrofoils de l'art antérieur présentent l'inconvénient d'entraîner une traînée dans l'eau, réduisant la vitesse de l'engin nautique lorsque celui atteint des vitesses importantes. Les performances des engins nautiques sont donc limitées par les hydrofoils de l'art antérieur.

Le but de l'invention est donc de pallier les inconvénients de l'art antérieur en proposant un hydrofoil permettant de réduire la portance et donc la traînée de l'hydrofoil dans l'eau en fonction de la vitesse de l'engin nautique pour augmenter la vitesse de l'engin.

Pour ce faire, l'invention se rapporte ainsi, dans son acceptation la plus large, à un hydrofoil pour engin nautique comprenant un fuselage et deux ailes disposées de chaque côté du fuselage et destinées à assurer une portance hydrodynamique à l'hydrofoil lorsqu'il est en déplacement dans l'eau.

Selon l'invention, les deux ailes sont mobiles en rotation par rapport au fuselage entre une position déployée lorsque l'hydrofoil est à l'arrêt et une position rétractée vers une partie arrière du fuselage par la pression de l'eau exercée sur les ailes lorsque l'hydrofoil se déplace dans l'eau.

L'invention fournit ainsi un hydrofoil permettant de réduire la portance et donc la traînée de l'hydrofoil dans l'eau en fonction de la vitesse de l'engin nautique et plus précisément lorsque la vitesse de l'engin nautique augmente.

Les ailes à géométrie variable de l'hydrofoil permettent de réduire la traînée au niveau des bords d'attaques et donc les frottements de l'hydrofoil avec l'eau. L'engin nautique peut atteindre ainsi des vitesses plus élevées. Le confort de navigation est également amélioré.

Selon l'invention, en position déployée, les deux ailes sont sensiblement perpendiculaires par rapport à un axe longitudinal L du fuselage. En position rétractée, chacune des deux ailes forme un angle avec l'axe longitudinal L lorsque la vitesse de l'hydrofoil est supérieure à une vitesse minimale. Cet angle est inférieur à 90° et diminue progressivement lorsque la vitesse de l'hydrofoil augmente.

Selon l'invention, l'hydrofoil comprend un ensemble mobile se déplaçant en translation à l'intérieur du fuselage suivant l'axe longitudinal (L) et par rapport au fuselage, les ailes étant mécaniquement reliées audit ensemble mobile , la rétractation des deux ailes vers le fuselage entraînant la translation de l'ensemble mobile vers une partie avant du fuselage, et le déploiement des deux ailes entraînant la translation de l'ensemble mobile vers la partie arrière du fuselage.

Cet ensemble mobile fournit un moyen de déplacement simple et solide.

De préférence, les ailes comprennent une première aile montée en rotation sur le fuselage autour d'un premier axe et une deuxième aile montée en rotation sur le fuselage autour d'un deuxième axe. L'hydrofoil comprend des moyens de liaison reliant les ailes à l'ensemble mobile.

Selon un mode de réalisation, les moyens de liaison comprennent deux évidements creusés de chaque côté de l'ensemble mobile dont un premier évidement recevant une extrémité interne de la première aile et un deuxième évidement recevant une extrémité interne de la deuxième aile. L'extrémité interne de la première aile forme un levier contre une partie avant du premier évidement pour pousser l'ensemble mobile vers la partie avant du fuselage lorsque la vitesse de l'hydrofoil augmente. L'extrémité interne de la deuxième aile forme un levier contre une partie avant du deuxième évidement pour pousser l'ensemble mobile vers la partie avant du fuselage lorsque la vitesse de l'hydrofoil augmente.

De préférence, l'hydrofoil comprend des moyens de compression reliés à l'ensemble mobile et opposant une force de résistance à une force exercée par la pression de l'eau sur les ailes lors du déplacement de l'hydrofoil pour que la rétractation des ailes soit adaptée à la vitesse de l'hydrofoil.

Ceci permet aux ailes de revenir à leur position initiale, c'est-à-dire en position déployée, lorsque l'hydrofoil ralentit ou s'arrête. Les moyens de compression opposent une force de résistance à une force exercée par la pression de l'eau sur les ailes de manière que le repli des ailes soit adapté à la vitesse de l'engin afin d'obtenir le meilleur ratio portance / traînée / vitesse.

Selon une variante, les moyens de compression comprennent au moins un ressort monté en compression entre une extrémité avant du fuselage et une extrémité avant de l'ensemble mobile.

Ceci fournit un mécanisme robuste, simple et léger.

Selon une autre variante, l'ensemble mobile présente une forme allongée suivant l'axe longitudinal L. L'hydrofoil comprend un empennage fixé à une extrémité arrière de l'ensemble mobile de façon que l'empennage soit mobile en translation entre une position déployée lorsque les ailes sont déployées et une position rétractée vers le fuselage lorsque les ailes sont retractées.

L'empennage peut rentrer partiellement à l'intérieur du fuselage ou non.

La longueur totale de l'hydrofoil peut diminuer par un mouvement de translation afin de rapprocher l'empennage vers les ailes de manière linéaire, en corrélation, en synergie et simultanément avec l'orientation progressive des ailes vers l'arrière. Ceci permet de réduire d'avantage la portance et la traînée dans l'eau.

Selon un autre mode de réalisation, l'ensemble mobile comprend un premier élément mobile actionné par la pression de l'eau sur la première aile et un deuxième élément mobile actionné par la pression de l'eau sur la deuxième aile. Le premier élément mobile et le deuxième élément mobile se déplacent indépendamment l'un par rapport à l'autre en fonction de la trajectoire suivie par l'hydrofoil.

Ainsi, chacune des ailes est autonome en cas de variation de trajectoire de l'hydrofoil. Cela permet la gestion du différentiel de vitesse dans les virages. Les performances de l'hydrofoil sont améliorées.

L'invention concerne également un engin nautique comprenant au moins un hydrofoil tel que défini précédemment. L'hydrofoil est fixé à l'engin nautique par un mât.

On décrira ci-après, à titre d'exemples non limitatifs, des formes d'exécution de la présente invention, en référence aux figures annexées sur lesquelles :
[Fig.1] illustre schématiquement une vue de dessus d'un hydrofoil présentant des ailes déployées, selon un premier mode de réalisation ;
[Fig.2] illustre schématiquement une vue de dessus de l'hydrofoil illustré sur la [Fig.1], lorsque ses ailes sont retractées ;
[Fig.3] illustre schématiquement une vue de dessus d'un hydrofoil ayant des ailes déployées, selon un deuxième mode de réalisation.

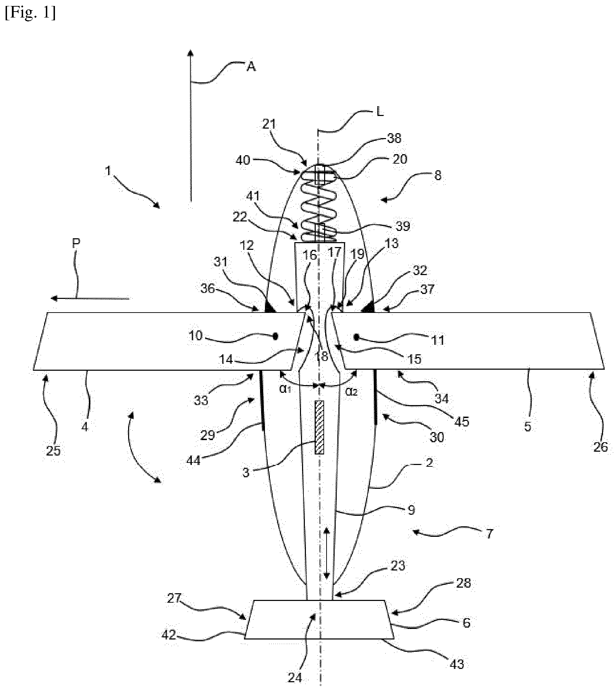

La [Fig.1] illustre un hydrofoil 1 (ou foil) comprenant un fuselage 2, un mât 3 destiné à être fixé à un engin nautique et deux ailes 4, 5 dont une première aile 4 et une deuxième aile 5 positionnées au niveau d'une partie avant 8 du fuselage 2.

Les termes « avant » et « arrière » sont définis par rapport au sens d'avancement A normal, de l'hydrofoil 1 dans l'eau.

Le fuselage 2 s'étend suivant un axe longitudinal L. Le mât 3 est perpendiculaire au fuselage 2.

Selon une variante, l'hydrofoil 1 peut comprendre également un empennage 6 positionné au niveau d'une partie arrière 7 du fuselage 2. L'empennage 6 peut être formé d'une seule ailette ou de deux ailettes 42, 43 sensiblement parallèles aux deux ailes 4, 5.

Les ailes 4, 5 et l'empennage 6 sont destinés à assurer une portance hydrodynamique à l'hydrofoil 1 lorsqu'il est en déplacement dans l'eau suivant le sens d'avancement A.

Les ailes 4, 5 sont sensiblement perpendiculaires au mât 3.

L'empennage 6 peut comprendre un aileron sensiblement perpendiculaire aux ailettes 42, 43.

Alternativement, les ailes 4, 5 peuvent former un angle avec le mât 3 qui est différent de 90°. Cet angle peut être compris entre 89° et 80° ou entre 91° et 100°, par exemple.

L'engin nautique peut être un bateau, une planche à voile, une planche de stand up paddle, une planche de surf, une planche de kite surf, une planche de wingsurf ou une planche de windsurf, par exemple.

Selon l'invention, les deux ailes 4, 5 se replient vers le fuselage 2 par la pression de l'eau exercée sur les ailes 4, 5 lorsque l'hydrofoil 1 se déplace dans l'eau suivant le sens d'avancement A, de préférence à très haute vitesse.

Plus précisément, les deux ailes 4, 5 sont mobiles en rotation par rapport au fuselage 2 entre une position déployée et une position rétractée vers une partie arrière 7 du fuselage 2. La position déployée correspond à un positionnement sensiblement perpendiculaire des deux ailes 4, 5 par rapport à l'axe longitudinal L, comme illustré sur la [Fig.1], lorsque la vitesse de l'hydrofoil 1 est nulle ou faible.

Lorsque l'engin nautique, et donc l'hydrofoil 1, est à l'arrêt, les deux ailes 4, 5 sont de préférence perpendiculaires à l'axe longitudinal L du fuselage 2. Un angle α₁ approximativement de 90°est formé entre la première aile 4 et l'axe longitudinal L du fuselage 2. De même, un angle α₂ approximativement de 90° est formé entre la deuxième aile 5 et l'axe longitudinal L du fuselage 2. Les deux ailes 4, 5 sont alignées.

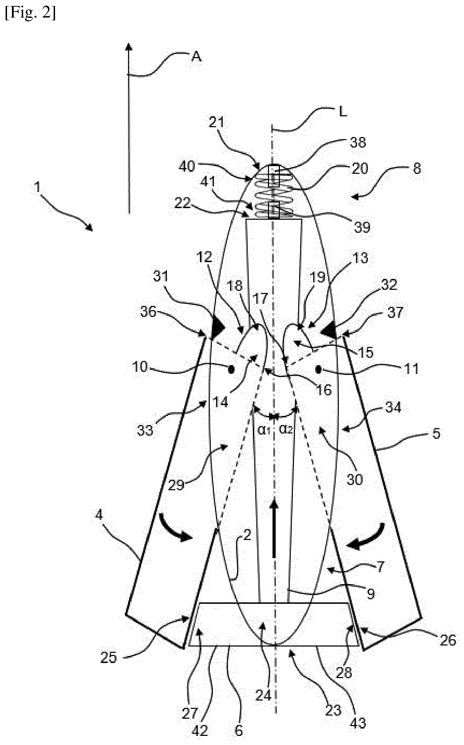

Lorsque les deux ailes 4, 5 sont en position rétractée vers la partie arrière 7 du fuselage 2, comme illustré sur la [Fig.2], c'est-à-dire lorsque la vitesse de l'hydrofoil 1 est supérieure à une vitesse minimale, les angles α₁ et α₂ sont inférieurs à 90° et diminuent progressivement lorsque la vitesse de l'hydrofoil 1 augmente.

Chacune des deux ailes 4, 5 s'étend suivant une direction principale P. Plus précisément, l'angle α₁ ou α₂ correspond à l'angle entre l'axe longitudinal L du fuselage 2 et la direction principale P de chacune des deux ailes 4, 5.

Selon le mode de réalisation des figures 1 et 2, les angles α₁ et α₂ sont égaux.

En variante, les deux ailes 4, 5 peuvent ne pas être complètement perpendiculaires par rapport à l'axe longitudinal L du fuselage 2 et peuvent former un angle α₁ ou α₂ un peu inférieur à 90°, 85° par exemple, avec l'axe longitudinal L, lorsque l'engin nautique est à l'arrêt.

Au fur et à mesure que la vitesse de l'engin nautique augmente, la pression de l'eau sur les ailes 4, 5 entraîne leur repliement en direction de la partie arrière 7 du fuselage 2, formant des ailes en flèche dont le degré de flèche est variable selon la vitesse.

Les ailes 4, 5 sont mécaniquement reliées à un ensemble mobile 9, 9a, 9b se déplaçant en translation à l'intérieur du fuselage 2 suivant l'axe longitudinal L et par rapport au fuselage 2 et aux ailes 4, 5.

La rétractation des deux ailes 4, 5 vers le fuselage 2 entraîne la translation de l'ensemble mobile 9, 9a, 9b vers la partie avant 8 du fuselage 2. Le déploiement des deux ailes 4, 5 entraîne la translation de l'ensemble mobile 9, 9a, 9b vers la partie arrière 7 du fuselage 2.

L'ensemble mobile 9, 9a, 9b s'étend suivant l'axe longitudinal L.

Selon le mode de réalisation représenté sur les figures 1 et 2, l'ensemble mobile 9, 9a, 9b comprend un seul élément mobile 9, présentant une forme de tige.

L'hydrofoil 1 comprend des moyens de liaison 12, 13 reliant les ailes 4, 5 à l'élément mobile 9 de façon à permettre un mouvement simultané des deux ailes 4, 5 et d'obtenir des angles α₁ et α₂ sensiblement identiques pour les deux ailes.

De préférence, les moyens de liaison 12, 13 comprennent deux évidements 14, 15 creusés de chaque côté de l'élément mobile 9 dont un premier évidement 14 recevant une extrémité interne 16 de la première aile 4 et un deuxième évidement 15 recevant une extrémité interne 17 de la deuxième aile 5.

L'extrémité interne 16 de la première aile 4 forme un levier contre une partie avant 18 du premier évidement 14 pour pousser l'élément mobile 9 vers la partie avant 8 du fuselage 2 lorsque la vitesse de l'hydrofoil 1 augmente. Par analogie, l'extrémité interne 17 de la deuxième aile 5 forme également un levier contre une partie avant 19 du deuxième évidement 15 pour pousser l'élément mobile 9 vers la partie avant 8 du fuselage 2 lorsque la vitesse de l'hydrofoil 1 augmente.

De préférence, l'extrémité interne 16 de la première aile 4 et l'extrémité interne 17 de la deuxième aile 5 forment une pointe ou présente une forme arrondie avec un faible rayon de courbure.

La première aile 4 est montée en rotation sur le fuselage 2 autour d'un premier axe 10 et la deuxième aile 5 est montée en rotation sur le fuselage 2 autour d'un deuxième axe 11.

Le premier axe 10 et le deuxième axe 11 sont positionnés à proximité des extrémités internes 16, 17 respectives.

Alternativement, les moyens de liaison 12, 13 peuvent comprendre deux ensembles d'engrenages (non représentés) dont un premier ensemble d'engrenages associé à la première aile 4 et un deuxième ensemble d'engrenages associé à la deuxième aile 5.

Chaque ensemble d'engrenages comprend un premier engrenage fixé à l'extrémité interne 16 de la première aile 4 coopérant avec un deuxième engrenage fixé sur l'un des côtés de l'élément mobile 9.

Les engrenages présentent des formes incurvées ou de demi-sphères. Le premier engrenage présente une contre forme du deuxième engrenage. Par exemple, le premier engrenage présente une forme concave et le deuxième engrenage présente une forme convexe.

L'hydrofoil 1 comprend des moyens de compression 20, 20a, 20b reliés à l'élément mobile 9 et opposant une force de résistance à une force exercée par la pression de l'eau sur les ailes 4, 5 lors du déplacement de l'hydrofoil 1 pour que la rétractation des ailes 4, 5 soit adaptée à la vitesse de l'hydrofoil 1.

De préférence, les moyens de compression 20, 20a, 20b sont placés à l'avant du fuselage.

Les moyens de compression 20, 20a, 20b comprennent au moins un ressort 20, 20a, 20b monté en compression entre une extrémité avant 21 du fuselage 2 et une extrémité avant 22 de l'élément mobile 9.

Les moyens de compression 20, 20a, 20b sont tarés en fonction des performances souhaitées.

Dans l'exemple des figures 1 et 2, les moyens de compression 20, 20a, 20b comprennent un seul ressort 20.

Le ressort 20 tend à repousser l'élément mobile 9 vers la partie arrière 7 du fuselage 2.

La rétractation des ailes 4, 5 se produit à partir d'une vitesse minimale de l'hydrofoil 1 (ou seuil). Il faut que la pression de l'eau sur les ailes 4, 5 soit suffisante pour permettre de compresser le ressort 20.

La vitesse minimale peut être un noeud, par exemple.

Les angles α₁ et α₂, et donc le niveau de portance et de traînée, dépendent du tarage du ressort 20 ou de son coefficient de raideur.

Selon une variante, l'extrémité avant 21 du fuselage 2 comprend un premier ergot 38 dans lequel est inséré une première extrémité 40 du ressort 20. Un deuxième ergot 39 est prévu à l'extrémité avant 22 de l'élément mobile 9 pour l'insertion et le maintien d'une deuxième extrémité 41 du ressort 20.

Alternativement, les moyens de compression 20, 20a, 20b peuvent être remplacés par un moyen de rappel tel un ressort de rappel relié à l'extrémité avant 22 de l'élément mobile 9 et à la partie arrière 7 du fuselage 2.

Alternativement, les moyens de compression 20, 20a, 20b peuvent être un vérin hydraulique, pneumatique ou à gaz (azote), par exemple.

Alternativement, les moyens de compression 20, 20a, 20b peuvent être positionnés dans le mât 3.

Selon un mode de réalisation, l'empennage 6 est fixé de manière non amovible à la partie arrière 7 du fuselage 2.

Selon un autre mode de réalisation, l'empennage 6 est fixé à une extrémité arrière 23 de l'élément mobile 9 de façon que l'empennage 6 soit mobile en translation entre une position déployée lorsque les ailes 4, 5 sont déployées et une position rétractée vers le fuselage 2 lorsque les ailes 4, 5 sont retractées.

Ainsi, l'empennage 6 suit le mouvement de translation de l'ensemble mobile 9 suivant l'axe longitudinal L.

La longueur totale de l'hydrofoil 1 peut diminuer par un mouvement de translation afin de rapprocher les ailettes 42 de l'empennage 6 vers les ailes 4, 5, de manière linéaire, en corrélation, en synergie et simultanément avec l'orientation progressive des ailes 4, 5 vers l'arrière.

L'empennage peut rentrer partiellement à l'intérieur du fuselage ou non.

La partie arrière 7 du fuselage 2 comprend une fente dans laquelle une partie centrale 24 de l'empennage 6 est insérée lorsque l'empennage 6 est en position rétractée.

Lorsque la vitesse de l'hydrofoil 1 est nulle ou faible, les deux ailes 4, 5 sont dépliées et l'empennage 6 est déployé hors du fuselage 2 au maximum.

Lorsque la vitesse de l'hydrofoil 1 augmente, les deux ailes 4, 5 se replient vers l'arrière du fuselage 2 et l'empennage 6 rentre partiellement dans la partie arrière 7 du fuselage 2, réduisant davantage la portance et la traînée dans l'eau. Les bords d'attaques sont davantage réduits.

Selon une autre variante, l'empennage 6 se déplace mais ne rentre pas dans la partie arrière 7 du fuselage 2.

De préférence, en vitesse maximale, lorsque les ailes 4, 5 sont complètement rétractées et que l'empennage 6 est en position rétractée maximale, un bord latéral d'extrémité 25 de la première aile 4 est en regard avec un bord 27 d'une première ailette 42 de l'empennage 6.

De même, un bord latéral d'extrémité 26 de la deuxième aile 5 est en regard avec un bord 28 d'une deuxième ailette 43 de l'empennage 6.

Le fuselage 2 comprend une première fente latérale 29 s'étendant suivant l'axe longitudinal L pour permettre le passage d'une portion 33 de la première aile 4 et son escamotage à l'intérieur du fuselage 2 lorsque la première aile 4 est en position rétractée.

De même, le fuselage 2 comprend une deuxième fente latérale 30 s'étendant suivant l'axe longitudinal L pour permettre le passage d'une portion 34 de la deuxième aile 5 et son escamotage à l'intérieur du fuselage 2 lorsque la deuxième aile 5 est en position rétractée.

La première fente latérale 29 comprend une butée 31 à une extrémité avant 36 de la première fente latérale 29.

La deuxième fente latérale 30 comprend une butée 32 à une extrémité 37 avant de la deuxième fente latérale 30.

Avantageusement, les fentes latérales 29, 30 sont chacune délimitées par un carénage 44, 45 faisant saillie sur la surface externe du fuselage 2, vers l'extérieur, et recouvrant une partie des ailes 4, 5 pour permettre d'assurer une continuité aérodynamique entre le fuselage 2 et les ailes 4, 5.

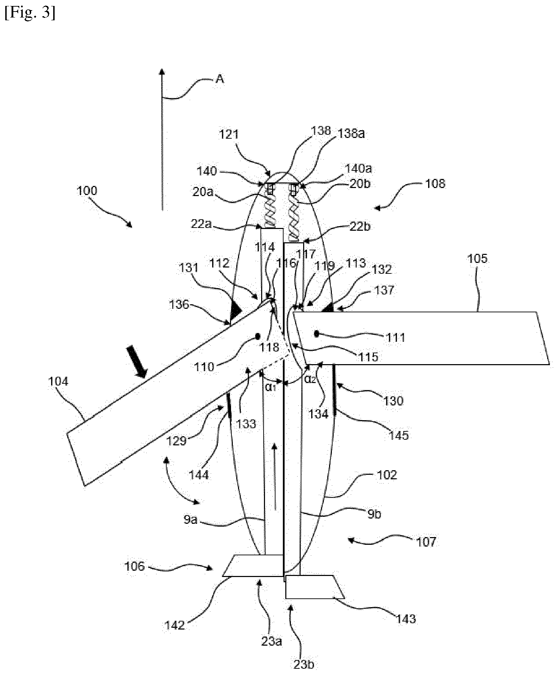

Selon un autre mode de réalisation représenté sur la [Fig.3], l'ensemble mobile 9, 9a, 9b comprend un premier élément mobile 9a actionné par une première aile 104 et un deuxième élément mobile 9b actionné par une deuxième aile 105.

La première aile 104 est montée en rotation sur le fuselage 102 autour d'un premier axe 110 et la deuxième aile 105 est montée en rotation sur le fuselage 102 autour d'un deuxième axe 111.

Le premier élément mobile 9a et le deuxième élément mobile 9b sont distincts et se déplacent indépendamment l'un par rapport à l'autre.

Des premiers moyens de liaison 112 relient mécaniquement la première aile 104 au premier élément mobile 9a et des deuxièmes moyens de liaison 113 relient mécaniquement la deuxième aile 105 au deuxième élément mobile 9b.

De préférence, les moyens de liaison 112, 113 comprennent deux évidements 114, 115 creusés de chaque côté des éléments mobiles 9a, 9b dont un premier évidement 114 recevant une extrémité interne 116 de la première aile 104 et un deuxième évidement 115 recevant une extrémité interne 117 de la deuxième aile 105.

L'extrémité interne 116 de la première aile 104 forme un levier contre une partie avant 118 du premier évidement 114 pour pousser le premier élément mobile 9a vers la partie avant 108 du fuselage 102 lorsque la vitesse de l'hydrofoil 100 augmente.

Par analogie, l'extrémité interne 117 de la deuxième aile 105 forme également un levier contre une partie avant 119 du deuxième évidement 115 pour pousser le deuxième élément mobile 9b vers la partie avant 108 du fuselage 102 lorsque la vitesse de l'hydrofoil 100 augmente.

L'hydrofoil 100 comprend un premier moyen de compression 20a relié au premier élément mobile 9a et opposant une force de résistance à une force exercée par la pression de l'eau sur la première aile 104 lors du déplacement de l'hydrofoil 100 pour que la rétractation de la première aile 104 soit adaptée à la vitesse de l'hydrofoil 100 et à la trajectoire suivie par l'engin nautique.

L'hydrofoil 100 comprend également un deuxième moyen de compression 20b relié au deuxième élément mobile 9b et opposant une force de résistance à une force exercée par la pression de l'eau sur la deuxième aile 105 lors du déplacement de l'hydrofoil 100 pour que la rétractation de la deuxième aile 105 soit adaptée à la vitesse de l'hydrofoil 100 et à la trajectoire qu'empreinte l'engin nautique.

De préférence, les moyens de compression 20a, 20b sont placés à l'avant du fuselage 2.

Selon un mode de réalisation possible, le premier moyen de compression 20a comprend un premier ressort 20a monté en compression entre une extrémité avant 121 du fuselage 102 et une extrémité avant 22a du premier élément mobile 9a.

Le deuxième moyen de compression 20b comprend un deuxième ressort 20b monté en compression entre une extrémité avant 121 du fuselage 102 et une extrémité avant 22b du deuxième élément mobile 9b.

Les ressorts 20a, 20b sont tarés en fonction des besoins et en particulier du rapport portance / traînée / vitesse souhaité.

De préférence, les ressorts 20a, 20b sont tarés identiquement et sont identiques.

Les ressorts 20a, 20b tendent à repousser indépendamment chacun des éléments mobiles 9a, 9b vers la partie arrière 107 du fuselage 102.

La rétractation des ailes 104, 105 se produit à partir d'une vitesse minimale de l'hydrofoil 100 (ou seuil). Il faut que la pression de l'eau sur les ailes 104, 105 soit suffisante pour permettre de compresser les ressorts 20a, 20b.

Lorsque l'engin nautique et donc l'hydrofoil 100 est à l'arrêt, les deux ailes 104, 105 sont de préférence perpendiculaires à l'axe longitudinal L du fuselage 102. Un angle α₁ approximativement de 90°est formé entre la première aile 104 et l'axe longitudinal L du fuselage 102. De même, un angle α₂ approximativement de 90° est formé entre la deuxième aile 105 et l'axe longitudinal L du fuselage 102. Les deux ailes 104, 105 sont alignées.

Au fur et à mesure que la vitesse de l'engin nautique augmente, la pression de l'eau sur les ailes 104, 105 entraîne une compression des ressorts 20a, 20b et par conséquent la rétractation des ailes 104, 105 en direction de la partie arrière 107 du fuselage 102.

Lorsque l'engin nautique va tout droit, la rétractation des ailes 104, 105 est identique et donc les angles α₁ et α₂ sont également identiques.

Cependant, lorsque l'engin nautique tourne vers la droite, tel qu'illustré sur le schéma de la [Fig.3], la pression de l'eau sur la première aile 104 est plus importante que la pression de l'eau sur la deuxième aile 105. Le premier ressort 20a est plus comprimé que le deuxième ressort 20b. La première aile 104 est davantage retractée que la deuxième aile 105.

Plus la courbure du virage vers la droite est faible, plus la première aile 104 est repliée. L'angle α₁ est donc plus faible que l'angle α₂. La portance et donc la traînée dans l'eau sont plus forts pour la première aile 104 que pour la deuxième aile 105.

Ce principe est identique pour un virage à gauche par rapport au schéma de la [Fig.3]

Les angles α₁ et α₂ ne sont donc pas toujours identiques et dépendent de la direction de l'hydrofoil 100 et du rayon de courbure du virage.

Ainsi, chacune des ailes 104, 105 est autonome en cas de variation de trajectoire de l'hydrofoil 100. Cela permet la gestion du différentiel de vitesse dans les virages.

Les angles α₁ et α₂ et donc le niveau de portance et de traînée dépendent également du tarage des ressorts 20a, 20b.

Selon une variante possible, l'extrémité avant 121 du fuselage 102 comprend un premier ergot 138 dans lequel est inséré une première extrémité 140 du premier ressort 20a. L'extrémité avant 121 du fuselage 102 comprend un deuxième ergot 138a dans lequel est inséré une première extrémité 140a du deuxième ressort 20b.

Selon un mode de réalisation, l'empennage 106 est fixé de manière non amovible à la partie arrière 107 du fuselage 102.

Selon un autre mode de réalisation, l'empennage 106 comprend deux ailettes 142, 143 sensiblement parallèles aux deux ailes 104, 105.

Une première ailette 142 est fixée à une extrémité arrière 23a du premier élément mobile 9a de façon que la première ailette 142 soit mobile en translation entre une position déployée lorsque la première aile 104 est dépliée et une position rétractée à l'intérieur du fuselage 2 lorsque la première aile 104 est rétractée.

Une deuxième ailette 143 est fixée à une extrémité arrière 23b du deuxième élément mobile 9b de façon que la deuxième ailette 143 soit mobile en translation entre une position déployée lorsque la deuxième aile 105 est dépliée et une position rétractée à l'intérieur du fuselage 102 lorsque la deuxième aile 105 est repliée.

Ainsi, les ailettes 142, 143 sont indépendantes et suivent le mouvement de translation des ensembles mobiles 9a, 9b respectifs suivant l'axe longitudinal L.

Le fuselage 102 comprend une première fente latérale 129 s'étendant suivant l'axe longitudinal L pour permettre le passage d'une portion 133 de la première aile 104 et son escamotage à l'intérieur du fuselage 102 lorsque la première aile 104 est en position rétractée.

De même, le fuselage 102 comprend une deuxième fente latérale 130 s'étendant suivant l'axe longitudinal L pour permettre le passage d'une portion 134 de la deuxième aile 105 et son escamotage à l'intérieur du fuselage 102 lorsque la deuxième aile 105 est en position rétractée.

La première fente latérale 129 comprend une butée 131 à une extrémité avant 136 de la première fente latérale 129.

La deuxième fente latérale 130 comprend une butée 132 à une extrémité 137 avant de la deuxième fente latérale 130.

Avantageusement, les fentes latérales 129, 130 sont chacune délimitées par un carénage 144, 145 faisant saillie sur la surface externe du fuselage 102, vers l'extérieur, et recouvrant une partie des ailes 104, 105 pour permettre d'assurer une continuité aérodynamique entre le fuselage 102 et les ailes 104, 105.

## Revendications

1. Hydrofoil (1, 100) pour un engin nautique comprenant un fuselage (2, 102) et deux ailes (4, 5, 104, 105) disposées de chaque côté du fuselage (2, 102) et destinées à assurer une portance hydrodynamique à l'hydrofoil (1, 100) lorsqu'il est en déplacement dans l'eau, **caractérisé en ce que** les deux ailes (4, 5, 104, 105) sont mobiles en rotation par rapport au fuselage (2, 102) entre une position déployée lorsque l'hydrofoil (1, 100) est à l'arrêt et une position rétractée vers une partie arrière (7) du fuselage (2, 102) par la pression de l'eau exercée sur les ailes (4, 5, 104, 105) lorsque l'hydrofoil (1, 100) se déplace dans l'eau, en position déployée, les deux ailes (4, 5, 104, 105) sont sensiblement perpendiculaires par rapport à un axe longitudinal (L) du fuselage (2, 102), en position rétractée, chacune des deux ailes (4, 5, 104, 105) formant un angle avec l'axe longitudinal (L) lorsque la vitesse de l'hydrofoil (1, 100) est supérieure à une vitesse minimale, ledit angle étant inférieur à 90° et diminuant progressivement lorsque la vitesse de l'hydrofoil (1, 100) augmente, les ailes (4, 5, 104, 105) sont mécaniquement reliées à un ensemble mobile (9, 9a, 9b) se déplaçant en translation à l'intérieur du fuselage (2, 102) suivant l'axe longitudinal (L) et par rapport au fuselage (2, 102), la rétractation des deux ailes (4, 5, 104, 105) vers le fuselage (2, 102) entraînant la translation de l'ensemble mobile (9, 9a, 9b) vers une partie avant (8, 108) du fuselage (2, 102), et le déploiement des deux ailes (4, 5, 104, 105) entraînant la translation de l'ensemble mobile (9, 9a, 9b) vers la partie arrière (7, 107) du fuselage (2, 102).

2. Hydrofoil (1, 100) selon la revendication 1, **caractérisé en ce que** les ailes (4, 5, 104, 105) comprennent une première aile (4, 104) montée en rotation sur le fuselage (2, 102) autour d'un premier axe (10, 110) et une deuxième aile (5, 105) montée en rotation sur le fuselage (2, 102) autour d'un deuxième axe (11, 111), l'hydrofoil (1, 100) comprenant des moyens de liaison (12, 13, 112, 113) reliant les ailes (4, 5, 104, 105) à l'ensemble mobile (9, 9a, 9b).

3. Hydrofoil (1, 100) selon la revendication 2, **caractérisé en ce que** les moyens de liaison (12, 13, 112, 113) comprennent deux évidements (14, 15, 114, 115) creusés de chaque côté de l'ensemble mobile (9, 9a, 9b) dont un premier évidement (14, 114) recevant une extrémité interne (16, 116) de la première aile (4, 104) et un deuxième évidement (15, 115) recevant une extrémité interne (17, 117) de la deuxième aile (5, 105), l'extrémité interne (16, 116) de la première aile (4, 104) formant levier contre une partie avant (18, 118) du premier évidement (14, 114) pour pousser l'ensemble mobile (9, 9a, 9b) vers la partie avant (8, 108) du fuselage (2, 102) lorsque la vitesse de l'hydrofoil (1, 100) augmente et l'extrémité interne (17, 117) de la deuxième aile (5, 105) formant levier contre une partie avant (19, 119) du deuxième évidement (15, 115) pour pousser l'ensemble mobile (9, 9a, 9b) vers la partie avant (8, 108) du fuselage (2, 102) lorsque la vitesse de l'hydrofoil (1, 100) augmente.

4. Hydrofoil (1, 100) selon l'une quelconque des revendications 1 à 3, **caractérisé en ce qu'**il comprend des moyens de compression (20, 20a, 20b) reliés à l'ensemble mobile (9, 9a, 9b) et opposant une force de résistance à une force exercée par la pression de l'eau sur les ailes (4, 5, 104, 105) lors du déplacement de l'hydrofoil (1, 100) pour que la rétractation des ailes (4, 5, 104, 105) soit adaptée à la vitesse de l'hydrofoil (1, 100).

5. Hydrofoil (1, 100) selon la revendication 4, **caractérisé en ce que** les moyens de compression (20, 20a, 20b) comprennent au moins un ressort (20, 20a, 20b) monté en compression entre une extrémité avant (21, 121) du fuselage (2, 102) et une extrémité avant (22, 22a, 22b) de l'ensemble mobile (9, 9a, 9b).

6. Hydrofoil (1, 100) selon l'une quelconque des revendications 1 à 5, **caractérisé en ce que** l'ensemble mobile (9, 9a, 9b) présente une forme allongée suivant l'axe longitudinal (L), l'hydrofoil comprenant un empennage (6, 106) fixé à une extrémité arrière (23, 23a, 23b) de l'ensemble mobile (9, 9a, 9b) de façon à ce que l'empennage (6, 106) soit mobile en translation entre une position déployée lorsque les ailes (4, 5, 104, 105) sont déployées et une position rétractée vers le fuselage (2, 102) lorsque les ailes (4, 5, 104, 105) sont rétractées.

7. Hydrofoil (1, 100) selon l'une quelconque des revendications 1 à 6, **caractérisé en ce que** l'ensemble mobile (9, 9a, 9b) comprend un premier élément mobile (9a) actionné par la pression de l'eau sur la première aile (104) et un deuxième élément mobile (9b) actionné par la pression de l'eau sur la deuxième aile (105), le premier élément mobile (9a) et le deuxième élément mobile (9b) se déplaçant indépendamment l'un par rapport à l'autre en fonction de la trajectoire suivie par l'hydrofoil (100).

8. Engin nautique, **caractérisé en ce qu'**il comprend au moins un hydrofoil (1, 100) tel que défini selon l'une quelconque des revendications 1 à 7, l'hydrofoil (1, 100) étant fixé à l'engin nautique par un mât (3).

## Patentansprüche

1. Tragflügelboot (1, 100) für ein Wasserfahrzeug, bestehend aus einem Rumpf (2, 102) und zwei Flügeln (4, 5, 104, 105), die auf jeder Seite des Rumpfs (2, 102) angeordnet sind und für einen hydrodynamischen Auftrieb sorgen sollen Tragflügelboot (1, 100), wenn es sich im Wasser bewegt, **dadurch gekennzeichnet, dass** die beiden Flügel (4, 5, 104, 105) relativ zum Rumpf (2, 102) zwischen einer ausgeklappten Position, wenn das Tragflügelboot ( 1, 100) stationär ist und sich durch den Druck des auf die Flügel (4, 5, 104, 105) ausgeübten Wassers in Richtung eines hinteren Teils (7) des Rumpfs (2, 102) zurückzieht, wenn das Tragflügelboot (1, 100) sich im Wasser bewegt, stehen in der ausgefahrenen Stellung die beiden Flügel (4, 5, 104, 105) im Wesentlichen senkrecht zu einer Längsachse (L) des Rumpfes (2, 102), in der eingefahrenen Stellung jeweils wobei die beiden Flügel (4, 5, 104, 105) mit der Längsachse (L) einen Winkel bilden, wenn die Geschwindigkeit des Tragflügels (1, 100) größer als ein Geschwindigkeitsminimum ist, wobei der Winkel kleiner als 90° ist und allmählich abnimmt wenn die Geschwindigkeit des Tragflügels (1, 100) zunimmt, werden die Flügel (4, 5, 104, 105) mechanisch mit einer beweglichen Baugruppe (9, 9a, 9b) verbunden, die sich translatorisch innerhalb des Rumpfes (2, 102) entlang bewegt der Längsachse (L) und relativ zum Rumpf (2, 102), wobei das Zurückziehen der beiden Flügel (4, 5, 104, 105) in Richtung Rumpf (2, 102) die Translation der beweglichen Einheit (9, 9a, 9b) in Richtung eines vorderen Teils (8, 108) des Rumpfes (2, 102) und das Ausfahren der beiden Flügel (4, 5, 104, 105) bewirkt die Translation der beweglichen Baugruppe (9, 9a, 9b) in Richtung des hinteren Teils (7, 107) des Rumpfes (2, 102).

2. Tragflügelboot (1, 100) nach Anspruch 1, **dadurch gekennzeichnet, dass** die Flügel (4, 5, 104, 105) einen ersten Flügel (4, 104) umfassen, der drehbar am Rumpf (2, 102) um eine erste Achse montiert ist ( 10, 110) und einen zweiten Flügel (5, 105), der drehbar am Rumpf (2, 102) um eine zweite Achse (11, 111) montiert ist, wobei das Tragflügelboot (1, 100) Mittel zur Verbindung (12, 13, 112) aufweist , 113) die Flügel (4, 5, 104, 105) mit der mobilen Baugruppe (9, 9a, 9b) verbindet.

3. Tragflügelboot (1, 100) nach Anspruch 2, **dadurch gekennzeichnet, dass** die Verbindungsmittel (12, 13, 112, 113) zwei Aussparungen (14, 15, 114, 115) umfassen, die auf jeder Seite der mobilen Baugruppe (9, 9a) gegraben sind , 9b) einschließlich einer ersten Aussparung (14, 114), die ein inneres Ende (16, 116) des ersten Flügels (4, 104) aufnimmt, und einer zweiten Aussparung (15, 115), die ein inneres Ende (17, 117) des ersten Flügels aufnimmt zweiten Flügel (5, 105), wobei das innere Ende (16, 116) des ersten Flügels (4, 104) einen Hebel gegen einen vorderen Teil (18, 118) der ersten Aussparung (14, 114) bildet, um das bewegliche zu drücken Baugruppe (9, 9a, 9b) in Richtung des vorderen Teils (8, 108) des Rumpfs (2, 102), wenn die Geschwindigkeit des Tragflügels (1, 100) zunimmt, und des inneren Endes (17, 117) des zweiten Flügels (5, 105), die einen Hebel gegen einen vorderen Teil (19, 119) der zweiten Aussparung (15, 115) bilden, um die bewegliche Baugruppe (9, 9a, 9b) in Richtung des vorderen Teils (8, 108) des Rumpfes zu drücken (2, 102), wenn die Geschwindigkeit des Tragflügelboots (1, 100) zunimmt.

4. Tragflügelboot (1, 100) nach einem der Ansprüche 1 bis 3, **dadurch gekennzeichnet, dass** es Kompressionsmittel (20, 20a, 20b) umfasst, die mit der mobilen Einheit (9, 9a, 9b) verbunden sind und einer Widerstandskraft entgegenwirken Kraft, die durch den Druck des Wassers auf die Flügel (4, 5, 104, 105) während der Bewegung des Tragflügelboots (1, 100) ausgeübt wird, so dass das Einfahren der Flügel (4, 5, 104, 105) angepasst wird die Geschwindigkeit des Tragflügelboots (1, 100).

5. Tragflügelboot (1, 100) nach Anspruch 4, **dadurch gekennzeichnet, dass** die Kompressionsmittel (20, 20a, 20b) mindestens eine Feder (20, 20a, 20b) umfassen, die unter Druck zwischen einem vorderen Ende (21, 121) des Tragflügelboots montiert ist Rumpf (2, 102) und ein vorderes Ende (22, 22a, 22b) der mobilen Baugruppe (9, 9a, 9b).

6. Tragflügelboot (1, 100) nach einem der Ansprüche 1 bis 5, **dadurch gekennzeichnet, dass** die bewegliche Baugruppe (9, 9a, 9b) eine längliche Form entlang der Längsachse (L) aufweist, wobei das Tragflügelboot ein Leitwerk (6, 106) umfasst ) an einem hinteren Ende (23, 23a, 23b) der beweglichen Baugruppe (9, 9a, 9b) befestigt, so dass das Höhenleitwerk (6, 106) translatorisch zwischen einer Position bewegbar ist, in der die Flügel (4, 5, 104) ausgefahren sind , 105) ausgefahren sind und eine zurückgezogene Position zum Rumpf (2, 102) einnehmen, wenn die Flügel (4, 5, 104, 105) eingefahren sind.

7. Tragflügelboot (1, 100) nach einem der Ansprüche 1 bis 6, **dadurch gekennzeichnet, dass** die bewegliche Baugruppe (9, 9a, 9b) ein erstes bewegliches Element (9a) umfasst, das durch den Druck des Wassers auf den ersten Flügel (104) betätigt wird ) und ein zweites bewegliches Element (9b), das durch Wasserdruck auf den zweiten Flügel (105) betätigt wird, wobei sich das erste bewegliche Element (9a) und das zweite bewegliche Element (9b) unabhängig voneinander relativ zueinander bewegen, abhängig von der Flugbahn, der sie folgen Tragflügelboot (100).

8. Wasserfahrzeug, **dadurch gekennzeichnet, dass** es mindestens ein Tragflügelboot (1, 100) nach einem der Ansprüche 1 bis 7 umfasst, wobei das Tragflügelboot (1, 100) durch einen Mast (3) an dem Wasserfahrzeug befestigt ist.

## Claims

1. Hydrofoil (1, 100) for a watercraft, said hydrofoil (1, 100) comprising a fuselage (2, 102) and two wings (4, 5, 104, 105) arranged on either side of the fuselage (2, 102) and designed to provide hydrodynamic lift to the hydrofoil (1, 100) when it is moving through the water, **characterized in that** the two wings (4, 5, 104, 105) are rotatable relative to the fuselage (2, 102) between a deployed position when the hydrofoil (1, 100) is stationary and a retracted position towards a rear part (7) of the fuselage (2, 102) by the water pressure exerted on the wings (4, 5, 104, 105) as the hydrofoil (1, 100) moves through the water, in the deployed position, the two wings (4, 5, 104, 105) are substantially perpendicular to a longitudinal axis (L) of the fuselage (2, 102), in the retracted position, each of the two wings (4, 5, 104, 105) forms an angle with the longitudinal axis (L) when the speed of the hydrofoil (1, 100) is greater than a minimum speed, the said angle being less than 90° and decreasing progressively as the speed of the hydrofoil (1, 100) increases, the said hydrofoil (1, 100) comprising a mobile assembly (9, 9a, 9b) translating inside the fuselage (2, 102) along the longitudinal axis (L) and relative to the fuselage (2, 102), the wings (4, 5, 104, 105) being mechanically connected to said mobile assembly (9, 9a, 9b), the retraction of the two wings (4, 5, 104, 105) towards the fuselage (2, 102) causing translation of the mobile assembly (9, 9a, 9b) towards a front part (8, 108) of the fuselage (2, 102), and deployment of the two wings (4, 5, 104, 105) causing translation of the mobile assembly (9, 9a, 9b) towards the rear part (7, 107) of the fuselage (2, 102).

2. Hydrofoil (1, 100) according to claim 1, **characterized in that** the wings (4, 5, 104, 105) comprise a first wing (4, 104) rotatably mounted on the fuselage (2, 102) around a first axis (10, 110) and a second wing (5, 105) rotatably mounted on the fuselage (2, 102) around a second axis (11, 111), the hydrofoil (1, 100) comprising connecting devices (12, 13, 112, 113) coupling the wings (4, 5, 104, 105) to the mobile assembly (9, 9a, 9b).

3. Hydrofoil (1, 100) according to claim 2, **characterized in that** the connecting devices (12, 13, 112, 113) comprise two recesses (14, 15, 114, 115) hollowed out on either side of the mobile assembly (9, 9a, 9b), of which a first recess (14, 114) receiving an inner end (16, 116) of the first wing (4, 104) and a second recess (15, 115) receiving an inner end (17, 117) of the second wing (5, 105), the inner end (16, 116) of the first wing (4, 104) forming a lever against a front portion (18, 118) of the first recess (14, 114) to push the mobile assembly (9, 9a, 9b) towards the front part (8, 108) of the fuselage (2, 102) as the speed of the hydrofoil (1, 100) increases, and the inner end (17, 117) of the second wing (5, 105) levering against a front portion (19, 119) of the second recess (15, 115) to push the mobile assembly (9, 9a, 9b) towards the front part (8, 108) of the fuselage (2, 102) as the speed of the hydrofoil (1, 100) increases.

4. Hydrofoil (1, 100) according to any one of claims 1 to 3, **characterized in that** it comprises compression devices (20, 20a, 20b) connected to the mobile assembly (9, 9a, 9b) and opposing a resisting force to a force exerted by the water pressure on the wings (4, 5, 104, 105) as the hydrofoil (1, 100) moves, so that the retraction of the wings (4, 5, 104, 105) is adapted to the speed of the hydrofoil (1, 100).

5. Hydrofoil (1, 100) according to claim 4, **characterized in that** the compression devices (20, 20a, 20b) comprise at least one spring (20, 20a, 20b) mounted in compression between a front end (21, 121) of the fuselage (2, 102) and a front end (22, 22a, 22b) of the mobile assembly (9, 9a, 9b).

6. Hydrofoil (1, 100) according to any one of claims 1 to 5, **characterized in that** the mobile assembly (9, 9a, 9b) has an elongated shape following the longitudinal axis (L), the hydrofoil comprising a tail (6, 106) attached to a rear end (23, 23a, 23b) of the mobile assembly (9, 9a, 9b) so that the tail (6, 106) is mobile in translation between a deployed position when the wings (4, 5, 104, 105) are deployed and a retracted position towards the fuselage (2, 102) when the wings (4, 5, 104, 105) are retracted.

7. Hydrofoil (1, 100) according to any one of claims 1 to 6, **characterized in that** the mobile assembly (9, 9a, 9b) comprises a first mobile element (9a) actuated by water pressure on the first wing (104) and a second mobile element (9b) actuated by water pressure on the second wing (105), the first mobile element (9a) and the second mobile element (9b) move independently of each other depending on the trajectory followed by the hydrofoil (100).

8. Watercraft, **characterized in that** it comprises at least one hydrofoil (1, 100) as defined according to any one of claims 1 to 7, the hydrofoil (1, 100) being attached to the watercraft by a mast (3).
